Europäisches Patentamt

(19) European Patent Office

Office européen des brevets

(11) EP 0 636 412 B1

(12) **FASCICULE DE BREVET EUROPEEN**

(45) Date de publication et mention
de la délivrance du brevet:
**28.10.1998 Bulletin 1998/44**

(51) Int. Cl.$^6$: **B01J 37/02**

(21) Numéro de dépôt: **94401603.9**

(22) Date de dépôt: **12.07.1994**

(54) **Procédé de fabrication de catalyseurs sur supports incluant une étape de centrifugation du support après enduction**

Verfahren zur Herstellung eines Trägerkatalysators welches eine Stufe von Zentrifugieren des Trägers nach einer Imprägnierung umfasst

Preparation process of supported catalysts including a centrifugation step of the support after impregnation

(84) Etats contractants désignés:
**BE GB IT**

(30) Priorité: **29.07.1993 FR 9309482**

(43) Date de publication de la demande:
**01.02.1995 Bulletin 1995/05**

(73) Titulaire:
**INSTITUT FRANCAIS DU PETROLE**
**92502 Rueil-Malmaison (FR)**

(72) Inventeurs:
- **Durand, Daniel**
  **F-92500 Rueil Malmaison (FR)**
- **Mabilon, Gil**
  **F-78420 Carrieres Sur Seine (FR)**
- **Guibard, Isabelle**
  **F-92500 Rueil Malmaison (FR)**

(56) Documents cités:
EP-A- 0 125 565     EP-A- 0 198 186
EP-A- 0 460 730     FR-A- 2 284 370

**Description**

La présente invention concerne la fabrication de catalyseurs, sur supports métalliques ou céramiques ou en matériaux inorganiques réfractaires. Elle concerne également les catalyseurs préparés par ce procédé.

Ces catalyseurs peuvent être mis en oeuvre par exemple dans le traitement des gaz d'échappement des moteurs à combustion interne à allumage commandé ou non, fonctionnant avec un carburant liquide, un gaz liquéfié de pétrole (GPL) ou un gaz naturel comprimé (GNC)

Les catalyseurs sont généralement préparés sur des supports se présentant sous forme de billes, pastilles, extrudés, toiles composées de fibres tressées ou enchevétrées, ou de structures monolithiques. Ces monolithes, en céramique ou en métal, peuvent se présenter sous la forme d'une structure en nid d'abeille, d'un enroulement de feuillards ou d'un empilement de plaques métalliques à canaux droits ou en zig-zag, ou encore être constitués par des mousses ou par un enchevêtrement de fibres métalliques ou céramiques ou autres matériaux réfractaires.

Pour que ces supports puissent devenir catalyseurs, il est nécessaire de déposer à leur surface au moins un composé catalytiquement actif pour la réaction considérée. En général, ces supports, par exemple toiles ou monolithes, ont une faible surface spécifique, inférieure à quelques $m^2$/g et, pour réaliser une dispersion maximun de l'élément catalytiquement actif à sa surface, il est souhaitable d'accroître cette surface spécifique : un des moyens de le réaliser consiste à déposer sur le support un matériau inorganique réfractaire présentant une grande surface spécifique, supérieure à quelques dizaines ou centaines de $m^2$/g.

L'opération unitaire (généralement appelée enduction ou "coating") consistant à réaliser sur ce support le dépôt (appelé couche poreuse ou "wash coat") du ou des matériaux de grande surface spécifique, se décompose généralement en 3 phases:

. une phase de mouillage du support par un excès de suspension renfermant au moins un matériau de grande surface, réalisée soit par immersion du support dans la suspension, soit par remplissage (sous pression ou sous vide) de la structure libre du support, soit par pulvérisation de la suspension sur et/ou dans le support;

. une phase d'élimination de l'excès de suspension généralement effectuée par balayage de la structure du support par un courant de gaz, tel que soufflage ou aspiration; et

. une phase de fixation du "wash coat" sur la surface du support par traitement thermique.

Les techniques mentionnées ci-dessus ne permettent pas de réaliser avec un maximum d'efficacité et de rapidité l'élimination maximum de l'excédent de "wash coat", ce qui contribue à un bouchage plus ou moins important de la porosité du support enduit et par conséquent à une augmentation des pertes de charges et à un moins bon fonctionnement du catalyseur fini.

La demande de brevet FR-A-2 284 370 décrit un procédé de préparation d'un catalyseur constitué par une structure monolithique poreuse de faible surface spécifique revêtue d'une couche d'oxyde réfractaire de surface spécifique élevée qui comprend la phase catalytiquement active.

Pour éviter, lors de l'application du revêtement d'oxyde réfractaire, l'obturation au moins partielle des passages existant dans la structure monolithique poreuse, le procédé décrit comprend les étapes suivantes :

(1) on plonge la structure monolithique dans une suspension d'un oxyde métallique actif ;

(2) on retire la structure revêtue obtenue de la suspension;

(3) on centrifuge la structure revêtue jusqu'à enlever essentiellement tout excès de suspension pour laisser un film d'oxyde métallique actif d'épaisseur sensiblement uniforme ; et

(4) on calcine la structure revêtue à une température comprise entre 399 et 982°C.

Les structures monolithiques considérées dans ce document (voir figures 1 et 2) sont des structures en nid d'abeille, qui sont placées dans des "paniers" perforés situés au bout de tiges reliées solidairement à un mandrin tournant de manière à assurer l'élimination par centrifugation de l'excès de suspension dans les canaux de la structure monolithique.

Pour des supports dont la porosité ouverte débouche sur toute la surface spécifique de la structure, il apparaît que la technique de centrifugation décrite dans la demande de brevet FR-A-2 284 370 ne peut pas convenir, pour la raison qu'elle ne permet d'évacuer l'excédent de suspension que sur une face de ladite structure.

Pour apporter une solution à ce problème, la demanderesse a trouvé une nouvelle technique (en particulier pour l'enduction des supports se présentant sous forme de toiles ou de monolithes et en particulier pour l'enduction des supports fibrillaires), d'élimination de l'excédent de suspension d'enduction.

L'invention propose donc un procédé de fabrication d'un catalyseur comprenant une phase catalytiquement active (A) déposée sur un support présentant une porosité ouverte débouchant sur sa surface périphérique, ledit procédé comprenant successivement :

. une étape (a) dans laquelle on prépare une suspension aqueuse renfermant des particules d'au moins un oxyde inorganique réfractaire de grande surface spécifique et éventuellement au moins une partie d'au moins un élément de la phase catalytiquement active (A);

. une étape (b) dans laquelle on remplit au moins en partie la porosité ouverte dudit support par la suspension préparée à l'étape (a);

. une étape (c) dans laquelle on soumet le support rempli au moins en partie par la suspension à un essorage par centrifugation;

. une étape (d) dans laquelle on traite thermiquement le support essoré; de manière à obtenir un support enduit d'une couche poreuse;

. les étapes (b), (c) et (d) pouvant être réalisées sucessivement plusieurs fois;

. éventuellement une étape (e) dans laquelle on imprègne le support enduit par une solution contenant le reste de l'élément ou des éléments de la phase catalytiquement active (A); et

. une étape (f) dans laquelle on active thermiquement le support enduit et imprégné,
ledit procédé étant caractérisé en ce que, à l'étape (c), ladite centrifugation est effectuée par rotation autour d'un axe par rapport auquel ledit support est sensiblement centré.

La présente invention concerne donc un nouveau procédé de préparation de catalyseur sur support de type fibres tissées ou enchevétrées ou de monolithe métallique à structure empilée (superposition de feuillards plus ou moins ondulés) caractérisé en ce que l'étape d'enduction du matériau présentant une grande surface spécifique, comprend au moins une phase d'essorage par centrifugation du support rempli de suspension. Cette phase peut être éventuellement précédée, accompagnée ou suivie d'une phase de soufflage ou d'aspiration. Le support enduit, séché et calciné, est ensuite imprégné par des agents précurseurs de la phase catalytiquement active, s'ils n'ont pas été introduits préalablement dans la suspension d'enduction, puis activé thermiquement.

Les supports mis en oeuvre peuvent être des toiles ou des mousses constituées de fibres de silice ou autres matériaux inorganiques réfractaires, ou des monolithes composés par l'enchevêtrement ou le tissage de fibres métalliques. Dans ce dernier cas et pour des conditions d'utilisation particulières (par exemple la post-combustion automobile), l'acier inoxydable comprenant du fer, du chrome et de l'aluminium subira un prétraitement spécifique (généralement oxydant pour développer une fine couche protectrice d'alumine en surface) pour éviter sa corrosion dans les conditions d'utilisation. Des supports monolithiques constitués soit par l'enroulement soit par l'empilement de feuillards métalliques plus ou moins ondulés à canaux droits ou en zig zag peuvent également être traités selon la technique de l'invention.

Un des paramètres qui caractérise ces supports est leur porosité ouverte, définie par la relation :

$$100 \times \frac{\text{(volume géomètrique du support - volume réel occupé par la matière)}}{\text{(volume géométrique du support)}}$$

qui sera avantageusement comprise entre 80% et 99.9%, de préférence entre 90 et 99.5% et d'une manière préférée entre 95 et 99% afin que les pertes de charge engendrées par le passage du gaz d'échappement au travers du support ne soient pas trop pénalisantes.

La première étape de préparation du catalyseur est de mouiller le support par un grand excès de suspension renfermant des particules d'au moins un oxyde inorganique de grande surface, éventuellement des agents catalytiquement actifs et/ou chimiquement ou thermiquement stabilisants. Ce mouillage peut être réalisé soit par immersion du support dans la suspension, soit par injection sous pression ou par aspiration sous dépression de la suspension dans le monolithe, soit encore par sa pulvérisation en fin brouillard sur et dans le support. Dans la suspension la tailles des particules est en général inférieure à 500 micromètres, de préférence inférieure à 100 micromètres.

Les temps d'immersion ou de pulvérisation ou de passage de la suspension sur le support sont compris entre 5 s et 300 s, de préférence entre 5 s et 60 s et d'une manière préférée entre 10 s et 30 s.

On procède à l'opération de centrifugation axiale qui consiste à disposer l'objet à centrifuger (c'est à dire le support contenant la suspension) dans l'axe de rotation du moteur, de sorte qu'il s'établit un gradient d'accélération entre zéro (dans l'axe de rotation de moteur) et une valeur maximale à la périphérie de l'objet. Une telle disposition permet d'évacuer l'excédent de suspension sur toute la surface périphérique de l'objet.

Dans la pratique le support à centrifuger est assujetti à l'arbre de rotation d'un moteur, soit directement, soit par l'intermédiaire d'un plateau, le support étant dans tous les cas sensiblement centré sur l'axe de l'arbre du moteur; ce dernier ayant une direction quelconque.

Il est cependant le plus souvent vertical et dans ce cas le support à centrifuger est posé sur un plateau tournant ou encore suspendu à l'arbre du moteur.

La vitesse de rotation du système peut être comprise entre 10 et 2000t/min, de préférence entre 50 et 1500t/min. et d'une manière privilégiée entre 100 et 1000t/min.

Les temps de centrifugation sont généralement compris entre 0,05 et 5 minutes, de préférence entre 0,1 et 2 min. et de préférence entre 0,2 et 1 min.

La température d'essorage par centrifugation est en général comprise entre 0 et 80°C mais de préférence entre 10 et 40°C.

Pour améliorer cette opération d'élimination de l'excès de suspension ainsi que l'homogénéité de la répartition de la fraction restante, une opération de soufflage peut être réalisée. Cependant, pour qu'elle soit efficace il est préférable de guider et canaliser partiellement le jet de gaz de soufflage pour qu'il traverse perpendiculairement le support en prenant le chemin le plus court, évitant ainsi sa dispersion dans tout le monolithe et par conséquent sa perte d'efficacité. Pour atteindre ce but, un masque sera disposé sur tout le support à l'exception de deux fentes de soufflage diamétralement opposées (entrée et sortie du gaz). Il sera également solidaire de l'organe de soufflage pour permettre la rotation du monolithe et son total balayage.

Ces fentes de soufflage, de hauteur égale à celle du support et de l'organe de soufflage, pourront avoir une ouverture de 0,5 à 10mm et de préférence entre 1 et 5mm. La vitesse linéaire du gaz à la sortie de la fente de soufflage peut être comprise entre 1 et 50m/s et de préférence entre 5 et 30m/s.

Pour éliminer l'eau de préparation de la suspension et fixer le "wash coat" au support, un traitement thermique est réalisé. La température de calcination sous air est généralement comprise entre 100 et 1100°C et de préférence entre 200 et 800°C.

Dans le cas ou la quantité de "wash coat" déposée n'est pas suffisante, une ou plusieurs autres opérations d'enduction peuvent être réalisées selon la même procédure.

Si la phase catalytiquement active n'a pas été introduite dans la suspension d'enduction, le monolithe enduit sera imprégné par une ou plusieurs solutions du ou des précurseurs des métaux actifs. Un traitement thermique final destiné à activer le catalyseur sera réalisé soit en atmosphère oxydante (air ou mélange azoteoxygène), neutre (azote), ou réductrice (hydrogène-azote, ou gaz issu de la combustion incomplète d'un gaz naturel, ou d'un gaz liquéfié GPL, ou d'un carburant liquide).

La température de ce traitement est en général, comprise entre 100 et 1100°C mais de préférence entre 300 et 700°C.

Le procédé de l'invention s'applique plus particulièrement à la fabrication de catalyseurs destinés au traitement des gaz d'échappement des moteurs à combustion interne de type diesel ou à allumage commandé fonctionnant soit à l'essence soit aux gaz de pétrole liquéfiés (GPL) soit au gaz naturel comprimé (GNC).

Les supports mis en oeuvre sont en général des supports métalliques de 0,005 à 20 litres de volume se présentant soit avec une stucture fibrillaire (porosité ouverte de 90 à 99.5%) soit avec une stucture de type feuillards enroulés ou empilés. Avantageusement, ils seront préalablement préoxydés sous air par exemple entre 800 et 1100°C.

La suspension d'enduction est préparée en milieu aqueux préférentiellement acidifié par de l'acide nitrique, de l'acide acétique ou de l'acide formique. Elle renferme des oxydes inorganiques refractaires tels que les alumines alpha, gamma, delta, éta, théta, kappa, khi, la silice, les silices alumines, les zéolithes, les silices magnésies, l'oxyde de titane et leurs mélanges.

Des concentrations massiques (exprimées par rapport à la totalité des matières séches de la suspension qui aurait été séchée puis calcinée à 1000°C) en oxyde de cérium ($CeO_2$) comprises entre 0.1 et 50%, de préférence entre 0,2 et 25% et de façon privilégiée entre 0,5 et 5%, ainsi qu'en oxyde de fer ($Fe_2O_3$) comprises entre 0,1 et 10%, de préférence entre 0,2 et 50% et d'une façon privilégiée entre 0,5 et 20% poids, sont introduites soit sous forme d'oxydes, de sels précurseurs d'oxydes ou préalablement imprégnés sur au moins un des oxydes réfractaires ci dessus.

Pour améliorer l'accrochage du "wash coat" sur le support métallique, des liants minéraux (tels que des alumines de type boehmite ou pseudo-boehmite) ou organiques (gommes arabiques, composés cellulosiques ou acryliques ..) sont ajoutés à la suspension avec des teneurs variant entre 0,1 et 10% poids par rapport au poids de la suspension d'enduction.

Afin de conférer au "wash coat" une bonne stabilité thermique, des composés d'au moins un élément (B) choisi parmi les métaux alcalins ou alcalino-terreux, ainsi que des composés d'au moins un élément appartenant aux terres rares (numéros atomique 57 à 71 compris) peuvent éventuellement être ajoutés dans des proportions allant de 0 à 10% et de préférence de 0 à 50% poids (par rapport à la quantité de matière sèche).

La teneur en "wash coat" préconisée pour ces catalyseurs d'épuration des gaz d'échappement de moteur à combustion interne est comprise entre 20 et 250g par litre de support et de préférence entre 50 et 150g par litre. Pour les teneurs les plus élevées, au moins deux opérations d'enduction sont nécessaires, une étape de séchage ou de calcination étant réalisée entre les deux.

La phase catalytiquement active (A) qui comprend au moins un élément appartenant aux groupes VIB, VIIB, VIII et IB de la classification périodique, peut être introduite partiellement ou en totalité lors de la phase d'enduction sous la forme d'au moins un oxyde inorganique préalablement imprégné par au moins une partie d'au moins un des constituants de cette phase active, ou par imprégnation, sur le support enduit de la partie restante ou de la totalité de ces constituants. Cette imprégnation peut être réalisée à partir d'une ou de plusieurs solutions contenant les sels précurseurs de métaux précieux tels que le platine, le palladium, le rhodium, le ruthénium, l'or et l'argent et éventuellement des sels de métaux de transition tels que le cuivre, le cobalt et le nickel. Les quantités présentes dans le catalyseur sont comprises entre 0,05 et 3g par litre de catalyseur, de préférence entre 0,1 et 2g par litre et d'une façon privilégiée entre 0,5 et 1,5g par litre.

Les exemples suivants illustrent l'invention. Les exemples 4 à 7 sont donnés à titre de comparaison.

## EXEMPLE 1

On verse dans 5l d'eau permutée additionnée de l'équivalent de 30g d'acide nitrique, 84g d'oxyde de cérium ($CeO_2$), 28g d'oxyde de fer ($Fe_2O_3$), 1290g d'alumine de type gamma et 180g d'équivalent alumine de type pseudo-boehmite. Cette suspension est broyée de telle manière que la taille maximale des particules soit inférieure à 10 microns.

Un monolithe métallique de 0,943 litre (d=100mm - L=120mm) à structure fibrillaire, c'est à dire composé par l'enchevêtrement de fibres métalliques de 50 microns d'épaisseur, de 0,5mm de largeur et de longueur variable (de type Gilphal 135 Ce), densifié puis rigidifié par étincelage électrique est préoxydé à 900°C sous air pendant 10 heures. Ce support, de porosité ouverte égale à 98% (rapport entre volume de la pièce et le volume réel de la matière), est immergé dans cette suspension pendant 30 secondes.

Le monolithe rempli de suspension est posé sur un support que l'on fait tourner à une vitesse de 800t/min. pendant 30 secondes. Lors de cette centrifugation, plus de 70% de la suspension est évacuée. Le support enduit est ensuite séché puis calciné dans un four dont la température est maintenue à 600°C pendant 2 heures. Ces étapes d'immersion, centrifugation et calcination sont répétées une deuxième fois afin de déposer l'équivalent de 100g de "wash coat" (couche poreuse du catalyseur) par litre de support.

Le monolithe métallique enduit est ensuite immergé dans une solution de métaux précieux de telle manière que la quantité de métaux fixée aprés secouage, séchage et calcination à 500°C pendant 2 heures soit de 1,06g par litre de support avec un rapport massique platine/rhodium de 5.

## EXEMPLE 2

Un monolithe composé du même enchevêtrement de fibres métalliques en acier de type "Gilphal 135 Ce" que ci-dessus mais prévu pour un écoulement radial (et non plus longitudinal) des gaz (section frontale annulaire dont le diamétre extérieur de la couronne est de 120mm et le diamètre intérieur de 40mm, la longueur étant de 120mm) et de porosité ouverte égale à 95%, est plongé dans 8 litres de suspension renfermant 1500g d'alumine gamma préalablement imprégnée par l'équivalent de 6% poids d'oxyde de cérium et 2% poids d'oxyde de fer, 300g d'équivalent alumine de type pseudo-boehmite, et 35g d'acide acétique. Après 30 secondes d'immersion, le support fibrillaire est égoutté puis placé sur un plateau tournant dont la vitesse de rotation est programmée à 400t/min. pendant une période de 60 secondes. La fraction de suspension éliminée lors de cette opération d'essorage par centrifugation est de 65%. Le support enduit est ensuite séché à 150°C puis calciné à 600°C pendant 2 heures. La masse de la couche poreuse (wash coat) déposée est de 32g.

Ces étapes unitaires d'enduction (immersion, centrifugation et traitement thermique) sont répétées deux autres fois : la quantité globale de la couche poreuse déposée correspond alors une masse de 105g de "wash coat" par litre de support.

Ce support enduit est ensuite imprégné par une solution renfermant des sels non chlorés de platine et rhodium, de telle manière que la teneur en métaux précieux soit de 1,5g par litre de support avec un rapport massique Pt/Rh de 8.

**EXEMPLE 3**

L'exemple 2 est reproduit de la même manière à l'exception près qu'une étape de soufflage est réalisée en fin d'étape d'essorage par centrifugation. Le monolithe est posé sur un plateau tournant puis centrifugé à 300t/min. pendant 30 s. Il est ensuite équipé d'un masque qui l'enveloppe totalement à l'exception de deux fentes diamétralement opposées et découpées sur toute la hauteur du monolithe et sur une largeur de 2 mm. Ce masque est également relié à un organe de soufflage équipé de la même fente qui, accolée au masque va permettre au gaz de traverser transversalement le monolithe de l'intérieur vers l'extérieur. L'organe de soufflage et le masque restant fixes on fait tourner le monolithe à 150t/min. pendant 30 s en réglant le débit de gaz de telle manière que la vitesse linéaire mesurée à la sortie de la fente du masque soit de 10m/s (mesure réalisée sur monolithe non enduit). La teneur en wash coat du support enduit, soufflé-essoré, puis séché et calciné à 600°C, est de 30g par litre de support. Cette série d'opérations unitaires est rénouvelée deux autres fois pour obtenir finalement une masse de la couche poreuse égale à 102g par litre de support.

La phase d'imprégnation et la quantité globale de métaux précieux déposés sont identiques à celles de l'exemple 2 mais les métaux mis en oeuvre sont le palladium et le platine avec un rapport massique Pt/Pd de 1.

**EXEMPLE 4 (comparaison)**

On reproduit exactement l'exemple 1 à l'exception que le monolithe, sorti du bain d'enduction n'est plus soumis à un essorage par centrifugation mais uniquement à un soufflage. Pour ce faire, on positionne le monolithe à une distance de 10 mm d'une fente de soufflage qui par déplacement lent, va balayer la surface plane du support fibrillaire. Les dimensions de cette fente sont de 2 mm. d'ouverture et de 110mm de long (égale au diamètre du support). La vitesse de déplacement de la fente de soufflage au dessus du support est de 2 mm par seconde et le débit d'air est de 40m$^3$/h (débit correspondant à celui mesuré dans l'exemple ci dessus).

Après deux aller-retour de la fente au dessus du monolithe, la fraction massique de suspension éliminée n'est que de 15%. Une nouvelle étape de soufflage réalisée dans les mêmes conditions n'a permis d'éliminer que 50% poids supplémentaire de suspension.

Après séchage et calcination dans les mêmes conditions que celles de l'exemple 1, la masse de "wash coat" déposé était de 195g.

L'étape d'imprégnation des métaux est réalisée comme dans l'exemple 1.

**EXEMPLE 5 (comparaison)**

On reproduit l'essai décrit dans l'exemple 2 à l'exception que le monolithe n'est pas essoré par centrifugation mais uniquement soufflé dans les conditions de l'exemple 4.

Après traitement thermique à 600°C, la masse de "wash coat "déposée en une seule opération d'enduction est de 182g.

L'étape d'imprégnation des métaux précieux est identique à celle décrite dans l'exemple 2

**EXEMPLE 6 (comparaison)**

On reproduit l'essai décrit dans l'exemple 3 à l'exception que le monolithe n'est pas essoré par centrifugation mais uniquement soufflé dans les mêmes conditions que celles de cet exemple.

Après traitement thermique à 600°C la masse de "wash coat" déposée en une seule opération d'enduction est de 174g.

L'étape d'imprégnation des métaux précieux est identique à celle décrite dans l'exemple 3.

**EXEMPLE 7 (comparaison)**

On reproduit exactement le catalyseur décrit dans l'exemple 4 à l'exception que la teneur en matière séche de la suspension est fortement abaissée (dilution par ajout d'eau), pour déposer, comme dans l'exemple 1, l'équivalent de 100g de wash coat par litre de support mais en une seule opération d'enduction.

La nature et la quantité de métaux précieux imprégné sur ce support enduit sont identiques à celle de l'exemple 1.

**EXEMPLE 8**

Un monolithe de forme ovale de 1.385 l de volume (150*88*120 mm) préparé par empilement de feuillards métalliques ondulés (acier de type Gilphal) de 50 microns d'épaisseur, est préoxydé sous air à 950°C pendant 8h puis immergé, à température ambiante, dans 6 litres de suspension renfermant les équivalents de 1900g d'alumine, 680g d'oxyde de cérium ($CeO_2$), 105g d'oxyde de fer($Fe_2O_3$) et 50g d'oxyde de lanthane ($La_2O_3$), 90g d'acide acétique et 15g de gomme arabique.

Le support est égoutté puis posé horizontalement sur un plateau tournant dont la vitesse de rotation est programmée pendant 60 secondes à 600t/min. Après cette étape de centrifugation, où plus de 60 % de la suspension a été éjectée, le support est séché puis calciné 4h à 700°C. La masse de "wash coat" est alors de 45g. Une deuxième enduction, réalisée dans les mêmes conditions conduit, après traitement thermique, à une teneur en matière sèche de 101g par litre de support.

Sur cette couche poreuse de grande surface spécifique (145m2/g) sont imprégnés, par l'intermédiaire d'une solution renfermant des sels nitrés de métaux précieux, l'équivalent de 0,22g de rhodium et 1,76g de palladium.

Le traitement thermique du monolithe imprégné est réalisé dans une première phase en milieu oxydant dans un four chauffé par la combustion in situ de gaz naturel avec un excès d'oxygène par rapport à la stoechiométrie de sa combustion et ce pendant 2 heures à 500°C. Le rapport air/gaz est ensuite progressivement abaissé jusqu'à ce que le milieu devienne réducteur; le temps de traitement dans ces conditions est de 30 min.

**EXEMPLE 9**

Un monolithe de 0,115 l (d=35mm - L=120mm) constitué par l'enroulement d'une toile de 5mm d'épaisseur de fibres de silice, et de porosité ouverte égale à 99.5% est traversé par 1,5 l d'une suspension aqueuse renfermant 150g d'alumine gamma pré-imprégnée par 1,55% poids de platine, 80g d'une alumine gamma pré-imprégnée par l'équivalent de 10% poids de cérium et l'équivalent de 4% de fer, 25g d'alumine pseudo-boehmite et 5g d'acide acétique. Cette opération est réalisée en plaçant le monolithe dans un système qui enveloppe parfaitement le support dans une position verticale, la partie supérieure étant équipée d'un réservoir dans lequel on introduit une partie de la suspension, la partie inférieure étant également équipée d'un réservoir relié à un organe déprimogène pour réaliser un vide partiel et favoriser l'écoulement de la suspension préalablement broyée (granulométrie moyenne égale à 3 microns) au travers de la toile de fibres enroulée.

Après cette opération de mouillage par la suspension, le support est placé verticalement sur un plateau tournant dont la montée en vitesse de rotation est programmée entre 0 et 300t/min. en 30 secondes (la mise directe en rotation à 300t/min étant impossible à cause de la déformation trop importante du monolithe lorsqu'il est saturé en suspension), cette vitesse étant maintenue constante pendant 30 secondes.

Pour déposer l'équivalent de 82g/l de "wash coat" sur ce support, quatre étapes d'enduction sont requises, chacune d'elles étant suivie d'une étape de séchage ou de calcination (impérative pour la dernière couche).

Le restant de la phase active est introduite sur le monolithe enduit par imprégnation d'une solution renfermant du nitrate de palladium de telle manière que la teneur globale en métaux soit de 2,214g par litre avec un rapport Pd/Pt de 2.

**EXEMPLE 10**

Un monolithe métallique (section ovale de 115cm$^2$ et 75mm de longueur) à structure empilée à canaux en zig zag, est enduit par une suspension renfermant l'équivalent de 500g d'alumine, 25g d'oxyde de cérium, 10g d'oxyde de fer et 5g d'oxyde de barium. Cette suspension broyée pour que la taille maximale des particules soit inférieure à 2 microns est pulvérisée sur chaque face du support avec suffisamment de pression pour qu'elle pénètre parfaitement à l'intérieur de tous les canaux du monolithe.

Le monolithe mouillé par la suspension, placé à plat sur un plateau tournant, est soumis à une force centrifuge engendrée par sa rotation à 400t/min. pendant 60 secondes. Dans ces conditions plus de 45% de la suspension déposée lors de l'opération de pulvérisation est éliminée et la masse de "wash coat" fixée au support après calcination est de 21g/l. Cette étape d'enduction est renouvelée deux autres fois pour que la masse enduite soit de 91g.

Une solution de dinitroso-diammino-platine est imprégnée sur le support enduit pour qu'après calcination la teneur du catalyseur en métal précieux soit de 1,76g/l.

**EXEMPLE 11**

**Mesure des pertes de charge**

Une des causes de perte de puissance d'un véhicule étant la contre-pression que doivent vaincre les gaz d'échappemnent à la sortie du moteur, une mesure de perte de charge a été réalisée sur les catalyseurs préparés selon l'invention, c'est à dire ayant subi une opération de centrifugation après mouillage par la suspension d'enduction, et ceux préparés uniquement par soufflage.

Cette mesure est réalisée en reliant le catalyseur équipé de son enveloppe à un débitmètre massique qui permet d'assurer et de réguler un débit d'air de plus de 150m$^3$/h. Une mesure de pression est réalisée au moyen d'un tube en U rempli d'eau et dont l'une des extrémités est connectée à l'entrée du catalyseur et l'autre laissée à l'air libre. Les valeurs mesurées pour un débit d'air correspondant à 100000 fois le volume du catalyseur (VVH=100000h-1) sont rassemblées dans le tableau I ci-dessous :

Tableau I

| Catalyseur (Ex.) | support | procédé | teneur en couche poreuse (g/l) | pertes de charge (mm eau) |
|---|---|---|---|---|
| 1 (invent.) | fib. mét. lg | Centr. | 100 (2*) | 180 |
| 2 (invent.) | fib. mét. rd | Centr. | 105 (3*) | 120 |
| 3 (invent.) | " | Centr.+ S | 108 (3*) | 105 |
| 4 (comparatif) | fib .mét. lg | S | 195 (1*) | 450 |
| 5 (comparatif) | fib. mét. rd | S | 182 (1*) | 370 |
| 6 (comparatif) | | S | 174 (1*) | 340 |
| 7 (comparatif) | fib.mét. lg | S | 100 (1*) | 270 |
| 8 (invent.) | mét. empil. | Centr. | 101 (2*) | 180 |
| 9 (invent.) | fib. Céram. | Centr. | 82 (4*) | 145 |
| 10 (invent.) | mét. empil. | Centr. | 106 (3*) | 95 |

(*) nombre d'étapes d'enduction
Centr = étape de centrifugation
S = soufflage
fib. = monolithe fibrillaire
lg = écoulement longitudinal
rd = écoulement radial

On peut constater que les catalyseurs, de même longueur, prépare's selon l'invention (centrifugation du monolithe rempli de suspension) engendrent des pertes de charges nettement plus faibles que ceux préparés selon l'art antérieur (soufflage uniquement) lorsqu'ils sont traversés par un débit de gaz dont la vitesse spatiale est constante. La très faible perte de charge enregistrée pour l'échantillon 10 résulte de sa plus faible longueur (75mm au lieu de 120).

**EXEMPLE 12** : Test activité au banc moteur sur catalyseurs vieillis 50h

Les catalyseurs préparés dans les exemples 1 à 8 sont vieillis et testés sur un banc moteur (moteur de 1900 cm$^3$) équipé d'un système de régulation de richesse et fonctionnant avec un carburant répondant aux spécifications Eurosuper.

Les catalyseurs sont montés dans une enveloppe métallique et installés sur la ligne d'échappement à environ 1 m du moteur.

Pour la phase de vieillissement, les catalyseurs sont directement connectés à la sortie de la pipe d'échappement du moteur que l'on fait fonctionner à un régime équivalent à celui d'un véhicule roulant à 150km/h. Les gaz qui passent alors sur le catalyseur ont une température voisine de 900°C et la période de ce traitement est de 50h.

Pour l'évaluation des performances de chacun des catalyseurs après ce vieillissement, le montage est légèrement modifié : un système de régulation de température des gaz est installé entre le moteur et le catalyseur, ce qui permet d'ajuster leur température, avant passage sur le catalyseur, entre 200 et 600°C. Le système de régulation de richesse (sonde lambda) permet d'alimenter le moteur par un mélange air-carburant à la stoechiométrie.

La détermination des concentrations des différents polluants à l'entrée et à la sortie du catalyseur est assurée en continu par un analyseur à infra-rouge pour le monoxyde de carbone, par un détecteur à ionisation de flamme pour les hydrocarbures et par un analyseur à chimiluminescence pour les oxydes d'azote.

Dans le tableau II ci-dessous sont rassemblés les résultats, pour chacun des catalyseurs, de la conversion intégrale des principaux polluants. Ce paramètre se détermine par le rapport de l'intégrale de la courbe représentant la conversion du polluant considéré entre 250 et 550°C sur l'intégrale de la courbe qui résulterait d'une conversion totale dans tout le domaine de température considéré.Cette valeur de la conversion intégrale (ou de l'efficacité) du catalyseur est exprimée en pourcent.

Tableau II

| Catalyseur | couche poreuse. | Métaux | | Efficacité | | |
|---|---|---|---|---|---|---|
| Ex. n° | g/l | teneur* (g/ft$^3$) | rap. mas. | CO | NOx | HC |
| 1 (invent.) | 100 | 30 | Pt/Rh =5 | 80 | 70 | 72 |
| 2 (invent.) | 105 | 42,5 | Pt/Rh =8 | 85 | 68 | 75 |
| 3 (invent.) | 108 | 42,5 | Pt/Pd =1 | 82 | 61 | 74 |
| 4 (compar.) | 195 | 30 | Pt/Rh =5 | 74 | 62 | 64 |
| 5 (compar.) | 182 | 42,5 | Pt/Rh =8 | 78 | 60 | 64 |
| 6 (compar.) | 174 | 42,5 | Pt/Pd =1 | 73 | 51 | 66 |
| 7 (compar.) | 100 | 30 | Pt/Rh =5 | 77 | 64 | 67 |
| 8 (invent) | 101 | 40 | Pd/Rh =8 | 84 | 68 | 71 |

* 30 g/ft$^3$ équivaut à 1,06 g/l
42,5 g/ft$^3$ équivaut à 1,5 g/l
40 g/ft$^3$ équivaut à 1,41 g/l.

Pour des formulations catalytiques différentes et des structures de monolithes différentes (écoulement longitudinal ou radial du gaz), on observe que les catalyseurs préparés selon l'invention sont plus performants que ceux préparés selon l'art intérieur, bien que ces derniers soient plus chargés en wash coat.

**Revendications**

1. Procédé de fabrication d'un catalyseur comprenant une phase catalytiquement active (A) déposée sur un support présentant une porosité ouverte débouchant sur sa surface périphérique, ledit procédé comprenant successivement :

  . une étape (a) dans laquelle on prépare une suspension aqueuse renfermant des particules d'au moins un oxyde inorganique réfractaire de grande surface spécifique et éventuellement au moins une partie d'au moins un élément de la phase catalytiquement active (A);

  . une étape (b) dans laquelle on remplit au moins en partie la porosité ouverte dudit support par la suspension préparée à l'étape (a);

  . une étape (c) dans laquelle on soumet le support rempli au moins en partie par la suspension à un essorage par centrifugation ;

  . une étape (d) dans laquelle on traite thermiquement le support essoré, de manière à obtenir un support enduit d'une couche poreuse;

  . les étapes (b), (c) et (d) pouvant être réalisées successivement plusieurs fois;

  . éventuellement une étape (e) dans laquelle on imprègne le support enduit par une solution contenant le reste de l'élément ou des éléments de la phase catalytiquement active (A); et

  . une étape (f) dans laquelle on active thermiquement le support enduit et imprégné ; ledit procédé étant caractérisé en ce que, à l'étape (c) ladite centrifugation est effectuée par rotation autour d'un axe par rapport auquel ledit support est sensiblement centré.

2. Procédé selon la revendication 1, caractérisé en ce que ledit support est un support céramique ou métallique, un support à structure fibrillaire ou un support constitué de feuillards empilés ou enroulés.

3. Procédé selon l'une des revendications 1 et 2 , caractérisé en ce qu'il présente une porosité ouverte comprise entre 80 et 99,9%, de préférence entre 90 et 99,5% et d'une manière privilégiée entre 95 et 99%.

4. Procédé selon l'une des revendications 1 à 3, caractérisé en ce que la taille des particules présentes dans la suspension est inférieure à 500 micromètres, et de préférence inférieure à 100 micromètres.

5. Procédé selon l'une des revendications 1 à 4, caractérisé en ce que, dans l'étape (c) d'essorage par centrifugation, la vitesse de rotation du support est comprise entre 10 et 2000 t/min. de préférence entre 50 et 1500t/min. et d'une façon préférée entre 100 et 1000t/min.

6. Procédé selon l'une des revendications 1 à 5, caractérisé en ce que, dans l'étape (c) le temps d'essorage par centrifugation est compris entre 0,05 et 5min., de préférence entre 0,1 et 2 min., et de façon préférée entre 0,2 et 1 min.

7. Procédé selon l'une des revendications 1 à 6, caractérisé en ce que, dans l'étape (c), la température d'essorage est comprise entre 0 et 80°C, et de façon préférée entre 10 et 40°C.

8. Procédé selon l'une des revendications 1 à 7, caractérisé en ce que le support enduit équipé d'une fenêtre de soufflage est soufflé avant, pendant ou après l'étape d'essorage, par passage transversal et direct d'un étroit pinceau de gaz.

9. Procédé selon la revendication 8, caractérisé en ce que la fenêtre de soufflage a, sur toute sa hauteur, une largeur comprise entre 0,5 et 10mm, et de préférence entre 1 et 5mm.

10. Procédé selon l'une des revendications 8 et 9, caractérisé en ce que la vitesse linéaire du gaz de soufflage à la sortie de la fenêtre de soufflage est comprise entre 1 et 50m/s et de préférence entre 5 et 30m/s

11. Procédé selon l'une des revendications 1 à 10, caractérisé en ce que, dans l'étape (d), la température de traitement thermique du support enduit est comprise entre 100 et 1100°C, de préférence entre 200 et 800°C.

12. Procédé selon l'une des revendications 1 à 11, caractérisé en ce que la phase active (A) est introduite soit partiellement ou totalement lors de l'étape (b) d'enduction, soit dans l'étape (e), par imprégnation de la couche poreuse enduite par une solution renfermant la partie restante ou la totalité des sels précurseurs de ladite phase active (A).

13. Procédé selon l'une des revendications 1 à 12, caractérisé en ce que, dans l'étape (f), le traitement thermique final est réalisé en atmosphère neutre, oxydante ou réductrice, à une température comprise entre 100 et 1100°C, de préférence entre 300 et 700°C.

14. Procédé selon l'une des revendications 1 à 13, caractérisé en ce que l'oxyde réfractaire est choisi dans le groupe formé par l'alumine alpha, l'alumine gamma, l'alumine delta, l'alumine éta, l'alumine théta, l'alumine kappa, l'alumine ro, l'alumine khi, la silice, les silices-alumines, les zéolithes, les silices-magnésies, l'oxyde de titane et leurs mélanges.

15. Procédé selon l'une des revendications 1 à 14, caractérisé en ce que la masse de la couche poreuse déposée sur le support après l'étape (d) est comprise entre 20 et 250g, de préférence entre 50 et 150g par litre de support.

16. Procédé selon l'une des revendications 1 à 15, caractérisé en ce que la phase catalytiquement active (A) comprend au moins un élément appartenant aux groupes VIB, VIIB, VIII et IB de la classification périodique, de préférence choisi parmi le platine, le rhodium et le palladium.

17. Procédé selon l'une des revendications 1 à 16, caractérisé en ce que la teneur en phase catalytiquement active (A) dans le catalyseur fini est comprise entre 0,05 et 3g, de préférence entre 0,1 et 2g/litre et d'une façon privilégiée entre 0,5 et 1,5 g par litre de support.

18. Procédé selon l'une des revendications 1 à 17, caractérisé en ce que la suspension préparée dans l'étape (a) contient en outre de l'oxyde de fer ($Fe_2O_3$) et de l'oxyde de cérium ($CeO_2$).

19. Procédé selon la revendication 18, caractérisé en ce que la teneur en oxyde de fer ($Fe_2O_3$), rapportée à la couche poreuse dans le catalyseur fini, est comprise entre 0,1 et 10%, de préférence entre 0,2 et 5% et d'une façon privilégiée entre 0,5 et 2% poids.

**20.** Procédé selon l'une des revendications 18 à 19, caractérisé en ce que la teneur en oxyde de cérium ($CeO_2$), rapportée à la couche poreuse dans le catalyseur fini, est comprise entre 0,1 et 50%, de préférence entre 0,2 et 25% et d'une façon privilégiée entre 0,5 et 5% poids.

**21.** Procédé selon l'une des revendications 1 à 20, caractérisé en ce que la suspension préparée dans l'étape (a) contient en outre au moins un composé soluble ou insoluble d'au moins un élément B choisi parmi les métaux alcalins et alcalino-terreux et les métaux des terres rares de numéros atomiques de 57 à 71 compris.

**22.** Procédé selon la revendication 21, caractérisé en ce que la teneur en composé de métal B rapportée à la couche poreuse est comprise entre 0 et 10%, de préférence entre 0 et 5%.

**23.** Procédé selon l'une des revendications 1 à 22, caractérisé en ce que dans l'étape (a), la suspension d'enduction est préparée en milieu aqueux éventuellement acidifié par de l'acide formique, de l'acide acétique ou de l'acide nitrique.

**24.** Procédé selon l'une des revendications 1 à 23, caractérisé en ce que, dans l'étape (a), on ajoute à la suspension un liant minéral tel qu'une alumine de type boehmite ou pseudo-boehmite, ou un liant organique tel que des gommes arabiques, des composés cellulosiques ou des composés acryliques, à des teneurs comprises entre 0,1 et 10% par rapport à la suspension d'enduction.

**25.** Catalyseur tel qu'obtenu par un procédé selon l'une des revendications 1 à 24.

**26.** Utilisation d'un catalyseur selon la revendication 25 dans le traitement des gaz d'échappement de moteurs à combustion interne à allumage commandé ou non fonctionnant avec un carburant liquide, un gaz de pétrole liquéfié (GPL) ou un gaz naturel comprimé (GNC).

**Claims**

**1.** A process for the production of a catalyst comprising a catalytically active phase (A) deposited on a support having an open porosity opening on its peripheral surface, said process successively comprising :

(a) preparing an aqueous suspension containing particules of at least one refractory inorganic oxide with large specific surface area and optionally at least a part of at least one element of the catalically active phase (A) ;
(b) filling at least part of the open porosity of said support with the suspension prepared in (a) ;
(c) draining the support filled at least partilly by the suspension by centrifuging ;
(d) thermally treating the support drained by centrifuging so as to obtain a support coated with a wash coat ; optionally repeating (b), (c) and (d) several times ; optionally (e) impregnating the coated support with a solution containing the rest of the element or elements of the catalytically active phase (A) ;
(f) thermally activating the coated and impregnated support ;

said process being characterized in that, in (c), said centrifuging is carried out by rotation around an axis with respect to which said support is substantially centered.

**2.** A process according to claim 1, characterized in that said support is a ceramic or metallic support, a support with a fibrillar structure or a support which is formed of stacked or wound strips.

**3.** A process according to any one of claims 1 and 2, characterized in that the support has an open porosity between 80 and 99.9%, preferably between 90 and 99.5% and in a preferred way between 95 and 99%.

**4.** A process according any one of claims 1 to 3, characterized in that the size of the particles in the suspension is less than 500 micrometers, preferably less than 100 micrometers.

**5.** A process according to any one of claims 1 to 4, characterized in that, in draining by centrifuging in (c), the rotational speed of the support is between 10 and 2,000 t/min, preferably between 50 and 1,500 t/min, and, in a preferred way, between 100 and 1,000 t/min.

6. A process according to any one of claims 1 to 5, characterized in that, in (c), the time of draining by centrifuging is between 0.05 and 5 min, preferably between 0.1 and 2 min and in a preferred way between 0.2 and 1 min.

7. A process according to any one claims 1 to 6, characterized in that, in (c), the temperature of the draining is between 0 and 80°C, preferably between 10 and 40°C.

8. A process according to any one of claims 1 to 7, characterized in that the coated support is equipped with a blowing window, and is blown before, during or after the step of draining by the crosswise, direct passage of a narrow jet of gas.

9. A process according to claim 8, characterized in that the blowing window has, over its entire height, a width of about 0.5 to 10 mm, preferably between 1 and 5 mm.

10. A process according to any one of claims 8 and 9, characterized in that the linear speed of the blowing gas at the outlet of the blowing window is between 1 and 50 m/s, preferably between 5 and 30 m/s.

11. A process according to any one of claims 1 to 10, characterized in that, in (d), the temperature of the thermal treatment of the coated support is between 100 and 1,100°C, preferably between 200 and 800°C.

12. A process according to any one of claims 1 to 11, characterized in that the active phase (A) is introduced either partially or totally during coating step (b), or in step (e), by impregnating the coated wash coat with a solution containing the rest or the totality of the precursor salts of said active phase (A).

13. A process according to any one of claims 1 to 12, characterized in that, in (f), the final thermal treatment is performed in a neutral, oxidizing or reducing atmosphere, at a temperature of between 100 and 1,100°C, preferably between 300 and 700°C.

14. A process according to any one of claims 1 to 13, characterized in that the refractory oxide is selected from the group formed by alpha alumina, gamma alumina, delta alumina, eta alumina, theta alumina, kappa alumina, ro alumina, khi alumina, silica, silica-alumina, a zeolite, a magnesium silica, titanium oxide or a mixture thereof.

15. A process according to any one of claims 1 to 14, wherein the wash coat deposited on the support after step (d) has a mass of between 20 and 250 g, preferably between 50 and 150 g, per liter of support.

16. A process according to any one of claims 1 to 15, wherein the catalytically active phase (A) comprises at least one element belonging to groups VIB, VIIB, VIII and IB of the periodic table, preferably selected from platinum, rhodium and palladium.

17. A process according to any one of claims 1 to 16, characterized in that the amount of catalytically active metal in the catalytically active phase (A) is between 0.05 and 3 g, preferably between 0.1 and 2 g and in a preferred way between 0.5 and 1.5 g, per liter of support.

18. A process according to any one of claims 1 to 17, characterized in that the suspension prepared in step (a) further contains iron oxide ($Fe_3O_3$) and cerium oxide ($CeO_2$).

19. A process according to claim 18, characterized in that the amount of iron oxide ($Fe_2O_3$), relative to the wash coat in the final catalyst is between 0.1 and 10%, preferably between 0.2 and 5% and in a preferred way between 0.5 and 2% by weight.

20. A process according to any one of claims 18 and 19, characterized in that the amount of cerium oxide ($CeO_2$), relative to the wash coat in the final catalyst, is between 0.1 and 50% by weight, preferably between 0.2 and 25% and in a preferred way between 0.5 and 5% by weight.

21. A process according to any one of claims 1 to 20, characterized in that the suspension prepared in step (a) further contains at least one soluble or insoluble compound of at least one element B, selected from the alkali metals, the alkaline-earth metals and the rare earth metals with an atomic number from 57 to 71, inclusive.

22. A process according to claim 21, characterized in that the amount of the compound of metal B, relative to the wash

# EP 0 636 412 B1

coat, is between 0 and 10%, preferably between 0 and 5%.

23. A process according to any one of claims 1 to 22, characterized in that, in step (a), the suspension is prepared in an aqueous environment, optionally acidified by formic acid, acetic acid or nitric acid.

24. A process according to any one of claims 1 to 23, characterized in that, in step (a), there is added to the suspension a mineral binder, such as an alumina of the boehmite or pseudo-boehmite type, or an organic binder, such as acacia gums, cellulose and acrylic compounds, at an amount of about 0.1 and 10% relative to the coating suspension.

25. A catalyst prepared by a process according to any one of claims 1 to 24.

26. The use of a catalyst according to claim 25 for the treatment of exhaust gases from an internal combustion engine operating with spark ignition or not, and operating with a liquid fuel, a liquefied petroleum gas or a compressed natural gas.

**Patentansprüche**

1. Verfahren zur Herstellung eines eine katalytisch aktive Phase (A), abgeschieden auf einem Träger, umfassenden Katalysators, wobei die aktive Phase eine offene, gegen ihre Umfangsfläche mündende Porosität aufweist und das Verfahren nachstehende Stufen aufeinanderfolgend umfaßt:

   . eine Stufe (a), in der man eine wäßrige Suspension vorbereitet, welche Partikel wenigstens eines feuerfesten anorganischen Oxids großer spezifischer Oberfläche und gegebenenfalls wenigstens einen Teil eines Elements katalytisch aktiver Phase (A) umfaßt;
   . eine Stufe (b), in der man wenigstens zum Teil die offene Porosität dieses Trägers durch die in Stufe (a) vorbereitete Suspension füllt;
   . eine Stufe (c), in der man den wenigstens zum Teil mit der Suspension gefüllten Träger einer Trocknung durch Zentrifugieren aussetzt;
   . eine Stufe (d), in der man thermisch den getrockneten Träger derart behandelt, daß ein mit einer porösen Schicht beschichteter Träger erhalten wird;
   . die Stufen (b), (c) und (d) können nacheinander mehrmals wiederholt werden;
   . gegebenenfalls eine Stufe (e), in der man den mit einer den Rest des Elements oder der Elemente der katalytisch aktiven Phase (A) enthaltenden Lösung beschichteten Träger imprägniert; und
   . eine Stufe (f), in der man thermisch den beschichteten und imprägnierten Träger aktiviert; wobei das Verfahren sich dadurch auszeichnet, daß in der Stufe (c) diese Zentrifugierung durch Rotation um eine Achse durchgeführt wird, bezüglich deren dieser Träger im wesentlichen zentriert wird.

2. Verfahren nach Anspruch 1, dadurch gekennzeichnet, daß dieser Träger ein keramischer oder metallischer Träger, ein Träger mit fibrillärer Struktur oder ein Träger, der aus gestapelten oder gewickelten Filzen besteht, ist.

3. Verfahren nach einem der Ansprüche 1 und 2, dadurch gekennzeichnet, daß er eine offene Porosität zwischen 80 und 99,9%, bevorzugt zwischen 90 und 99,5% und noch privilegierter zwischen 95 und 99% aufweist.

4. Verfahren nach einem der Ansprüche 1 bis 3, dadurch gekennzeichnet, daß die Anmessung der in der Suspension vorhandenen Partikel unter 500 Mikrometer und bevorzugt unter 100 Mikrometer liegt.

5. Verfahren nach einem der Ansprüche 1 bis 4, dadurch gekennzeichnet, daß in der Stufe (c) der Trocknung durch Zentrifugierung die Rotationsgeschwindigkeit des Trägers zwischen 10 und 2000 t/min, bevorzugt zwischen 50 und 1500 t/min und noch vorteilhafter zwischen 100 und 1000 t/min beträgt.

6. Verfahren nach einem der Ansprüche 1 bis 5, dadurch gekennzeichnet, daß in der Stufe (c) die Trocknungszeit durch Zentrifugieren zwischen 0,05 und 5 min und bevorzugt zwischen 0,1 und 2 min und vorteilhaft zwischen 0,2 und 1 min beträgt.

7. Verfahren nach einem der Ansprüche 1 bis 6, dadurch gekennzeichnet, daß in der Stufe (c) die Trocknungstemperatur zwischen 0 und 80°C, und bevorzugt zwischen 10 und 40°C beträgt.

8. Verfahren nach einem der Ansprüche 1 bis 7, dadurch gekennzeichnet, daß der beschichtete, mit einem Blasfen-

13

ster ausgestattete Träger vor, während oder nach der Trocknungsstufe durch transversales und direktes Durchleiten eines schmalen Gasbündels beblasen wird.

9. Verfahren nach Anspruch 8, dadurch gekennzeichnet, daß das Blasfenster über seine gesamte Höhe eine Breite zwischen 0,5 und 10 mm, bevorzugt zwischen 1 und 5 mm hat.

10. Verfahren nach einem der Ansprüche 8 und 9, dadurch gekennzeichnet, daß die Lineargeschwindigkeit des Blasgases am Austritt aus dem Blasfenster zwischen 1 und 50 m/s und bevorzugt zwischen 5 und 30 m/s liegt.

11. Verfahren nach einem der Ansprüche 1 bis 10, dadurch gekennzeichnet, daß in der Stufe (d) die Temperatur der thermischen Behandlung des beschichteten Trägers zwischen 100 und 1100°C, bevorzugt zwischen 200 und 800°C liegt.

12. Verfahren nach einem der Ansprüche 1 bis 11, dadurch gekennzeichnet, daß die aktive Phase (A) entweder partiell oder vollständig während der Induktionsstufe (b) oder in der Stufe (e) durch Imprägnieren der beschichteten porösen Schicht durch eine Lösung eingeführt wird, die den verbleibenden Teil oder die Gesamtheit der Vorläufersalze dieser aktiven Phase (A) umfaßt.

13. Verfahren nach einem der Ansprüche 1 bis 12, dadurch gekennzeichnet, daß in der Stufe (f) die thermische abschließende Behandlung in neutraler, oxidierender oder reduzierender Atmosphäre bei einer Temperatur zwischen 100 und 1100°C, bevorzugt zwischen 300 und 700°C durchgeführt wird.

14. Verfahren nach einem der Ansprüche 1 bis 13, dadurch gekennzeichnet, daß das feuerfeste Oxid gewählt ist aus der Gruppe, die gebildet ist durch Alpha-aluminiumoxid, Gamma-aluminiumoxid, Delta-aluminiumoxid, Eta-aluminiumoxid, Theta-aluminiumoxid, Kappa-aluminiumoxid, Rho-aluminiumoxid, Chi-aluminiumoxid, Siliciumoxid, den Siliciumoxiden-Aluminiumoxiden, den Zeolithen, den Siliciumoxiden-Magnesiumoxiden, dem Titanoxid und deren Gemischen.

15. Verfahren nach einem der Ansprüche 1 bis 14, dadurch gekennzeichnet, daß die Masse der porösen, auf den Träger nach Stufe (d) abgeschiedenen Schicht zwischen 20 und 250 g, bevorzugt zwischen 50 und 150 g pro Liter Träger umfaßt.

16. Verfahren nach einem der Ansprüche 1 bis 15, dadurch gekennzeichnet, daß die katalytisch aktive Phase (A) wenigstens ein Element umfaßt, das zu den Gruppen VIB, VIIB, VIII und IB des Periodensystems gehört und bevorzugt unter Platin, Rhodium und Palladium gewählt ist.

17. Verfahren nach einem der Ansprüche 1 bis 16, dadurch gekennzeichnet, daß deren Gehalt an katalytisch aktiver Phase (A) im endgültigen Katalysator zwischen 0,05 und 3 g, bevorzugt zwischen 0,1 und 2 g/Liter und noch privilegierter zwischen 0,5 und 1,5 g pro Liter Träger umfaßt.

18. Verfahren nach einem der Ansprüche 1 bis 17, dadurch gekennzeichnet, daß die in Stufe (a) hergestellte Suspension im übrigen Eisenoxid ($Fe_2O_3$) und Ceroxid ($CeO_2$) enthält.

19. Verfahren nach Anspruch 18, dadurch gekennzeichnet, daß der Gehalt an Eisenoxid ($Fe_2O_3$) bezogen auf die poröse Schicht im endgültigen Katalysator zwischen 0,1 und 10%, bevorzugt zwischen 0,2 und 5% und noch weiter privilegiert zwischen 0,5 und 2 Gew.-% umfaßt.

20. Verfahren nach einem der Ansprüche 18 bis 19, dadurch gekennzeichnet, daß der Gehalt an Ceroxid ($CeO_2$), bezogen auf die poröse Schicht im endgültigen Katalysator, zwischen 0,1 und 50%, bevorzugt zwischen 0,2 und 25% und privilegierter zwischen 0,5 und 5 Gew.-% umfaßt.

21. Verfahren nach einem der Ansprüche 1 bis 20, dadurch gekennzeichnet, daß die in Stufe (a) hergestellte Suspension im übrigen wenigstens eine lösliche oder unlösliche Verbindung wenigstens eines Elementes B enthält, das gewählt ist aus den Alkali- und Erdalkalimetallen und den Seltenerdmetallen mit den Atomzahlen 57 bis 71 einschließlich.

22. Verfahren nach Anspruch 21, dadurch gekennzeichnet, daß der Gehalt an Metall B, bezogen auf die poröse Schicht, zwischen 0 und 10%, bevorzugt zwischen 0 und 5% beträgt. 23. Verfahren nach einem der Ansprüche 1 bis 22, dadurch ge

**23.** kennzeichnet, daß in der Stufe (a) die Beschichtungssuspension hergestellt wird in wäßriger Umgebung, die gegebenenfalls durch Ameisensäure, Essigsäure oder Salpetersäure gesäuert ist.

**24.** Verfahren nach einem der Ansprüche 1 bis 23, dadurch gekennzeichnet, daß in Stufe (a) man der Suspension ein mineralisches Bindemittel wie ein Aluminiumoxid vom Typ Boehmit oder Pseudoboehmit oder ein organisches Bindemittel wie Gummiarabika, Celluloseverbindungen oder Acrylverbindungen mit Gehalten zwischen 0,1 und 10%, bezogen auf die Beschichtungssuspension, zugibt.

**25.** Katalysator erhalten nach einem Verfahren eines der Ansprüche 1 bis 24.

**26.** Verwendung eines Katalysators nach Anspruch 25 bei der Behandlung der Auspuffgase von Motoren mit gegebenenfalls gesteuerter innerer Verbrennung, die mit einem flüssigen Brennstoff, einem Gas aus verflüssigtem Erdöl (GPL) oder einem komprimierten Erdgas (GNC) arbeiten.